# EUROPEAN PATENT SPECIFICATION

(11) **EP 0 538 223 B1**
(45) Date of publication and mention of the grant of the patent: **20.01.1999**
(21) Application number: 92850240.0
(22) Date of filing: 09.10.1992
(51) Int. Cl.: A47B 57/16, A47B 57/20, F16B 12/28, F16B 17/00, B21D 39/03

(54) **A method and a device for joining sheet metal details, preferably shelving details**
Verfahren und Vorrichtung zum Verbinden von Teilen aus Metallblech, vorzugsweise für Regale
Procédé et dispositif d'assemblage pour pièces métalliques en tôle, de préférence pour étagères

(30) Priority: 14.10.1991 SE 9102970
(43) Date of publication of application: 21.04.1993
(73) Proprietor: CONSTRUCTOR GROUP AS, 3500 Honefoss (NO)
(72) Inventor: Berghel, Jan Fredrik, S-661 00 Säffle (SE)
(74) Representative: Betten & Resch

(56) References cited:
- EP-A- 0 262 110
- FR-A- 1 500 021
- US-A- 3 190 250

## Description

This invention relates to a method and a system for joining sheet metal details, preferably for shelvings.

Sheet metal shelvings are commonly known and used for various purposes and for storing different kind of articles because of their wear resistance. These shelvings usually are built up from side panels, cross braces or back panels and shelves which are fastened to each other by screw joints. The drawback with such an arrangement is however that the assembling work is very time consuming because of the large amount of screw joints.

To facilitate assembling and reduce the number of components and to adapt the fabrication to automatic manufacturing methods it has been suggested to use a shelving which is decribed in EP-A-0 262 110. This shelving comprises T-shaped posts to which the shelves are fixed solely by clamping action the posts and shelves being so designed that as large a stiffness as possible is achieved in the final construction. If desirable the shelving construction can be completed with side- and rear panels which are fastened in a conventional way by means of screw joints thereby further increasing the stability.

It has however been proved that in such a system it is rather troublesome to move the shelves, which often is desirable, in order to change space between the shelves to suit different articles being stored, since the shelves are an integrated part of the system keeping the posts in position.

It is thus a wish to make it possible to quickly assemble a skeleton construction comprising posts and bars and sometimes also back- or side panels before the shelves are placed at their positions in the shelving.

A method and system according to the preambles of claims 1 and 2 is generally known from US-A-3,190,250, however in connection with the manufacturing of air guide devices formed by severing desired length of stock material having protuberances or dimples, and disposing generally rectangular metal blades within slots of adjacent pairs of protuberances, followed by a seating of the blades within the protuberances by manually curving the blades to conform with the slots through, and thereafter deform a portion of the blade which projects through the slot by means of a twisting tool to lock the blade against the stock material.

The purpose of this invention is to create i.a. a structure where the braces, side- or back panels are joint to the posts in a very simple manner and without the use of loose fastening details such as screw joints. This is achieved by means of a method and a system having the caracteristics specified in independent claims 1 and 2. Various embodiments of the system defined in independent claim 2 are specified in the dependent claims 3 to 10.

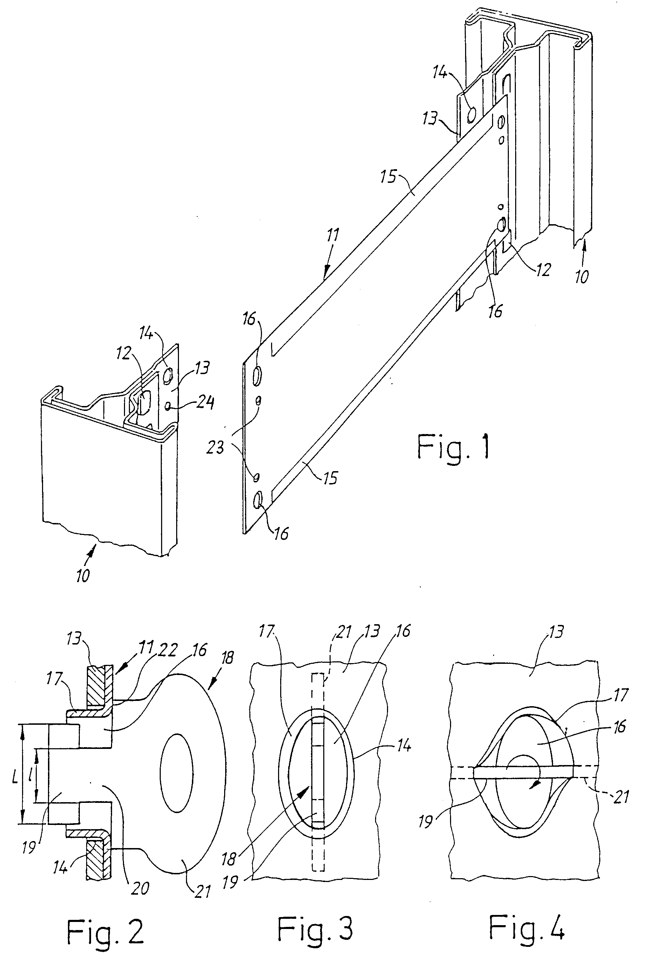

An embodiment of the invention will now be described with reference to the attached drawing on which Fig. 1 is a perspective view of two details for a shelving which are to be assembled, Fig. 2 is a vertical section through the details when they are are combined but not fixed to each other, a particular tool being used to create the joint between the articles. Fig 3 is a sideview of the arrangement shown in Fig. 2 whereas Fig. 4 shows the same view as Fig. 3 but with the tool in use.

The shelving details shown in Fig. 1 comprise posts 10 and bars 11 which are to be fixed to each other and which together form a side part of the shelving construction. The posts are T-shaped and manufactured from bent sheet metal and are provided with several lugs 12 on which shelves, not shown, are resting. The post comprises an elongated flange 13 with several non circular (oval) through holes 14 placed at a distance from each other.

The bar 11 is an elongated sheet metal plate which might have reinforcements 15 consisting of bent edge parts. Each end of the bar has several non circular (oval) holes 16 placed at the same distance from each other as the holes 14 in the posts each hole 16 being surrounded by a collar part 17 extending from one side of the bar and having a height which is larger than the material thickness of the flange 13 of the post.

When assembling the details the collar parts 17 are inserted into the holes 14 of the flange 13 after which a plate shaped tool which is delivered together with the details is used to deform the portions of the collar part 17 which is positioned outside the flange 13 of the post so that the bar is fixed to the post.

The tool 18 comprises a first portion which is a deformation head 19 consisting of a plate with a length L being such that the head can be inserted in the non circular opening 16 of the collar at the largest "diameter". The head continues into a second plate shaped tool portion 20 the length l of which is smaller than the opening 16 of the collar measured at the smallest "diameter". The second tool portion continues into a third plate shaped tool portion 21 which operates as a handle with an edge surface 22 which when the tool is inserted into the collar 17 abuts one side of the bar 11. The distance between the deformation head 19 and the surface 22 preferably is the sum of the sheet metal thickness of the flange 13 and twice the thickness of the bar.

As has been mentioned above the deformation head 19 of the tool is inserted into the collar 17 after the collar has been inserted into the hole 14 of the flange 13. When the handle 21 then is turned manually the deformation head will contact with the outer parts of the collar and urge them during the continued turning motion outwards so that a bead is formed at the rear side of the flange 13 around portions of the hole 16. Fig 4 shows how the collar part has been partly deformed when the handle has been turned through 90°. Continued turning for further 90° means that additional portions of the collar part 17 are deformed and that the tool can then be taken out and the procedure repeated for the other collar parts of the bar 11. In this way a quick and stiff fixation of the bar is achieved without the use of complicated tools or conventional screw joints.

It should be mentioned that this assembling system suitably is completed with conventional holes 23 and 24 in the bar and the post in order to allow assembling with customary screw joints if for any reason the shelving should be disassambled in order to be used at another place. Of course the arrangement can also be used to fasten complete side panels or back panels at the posts or at the shelves if this should be desirable. It should also be mentioned that the invention of course not is limited to the use of ellipse shaped holes and collar parts as shown in the figures but that many other types of non circular holes could be used.

## Claims

1. A method for joining two sheet metal details (11, 10) having abutting surfaces, wherein a surface portion of the first detail (11) has an outwardly extending collar part (17) which is integrated with the first detail (11) and has a hole (16), **characterized in**
forming said collar part (17) to be the abutting surface of the first detail with said hole (16) being non-circular, said collar part (17) thus configured to fit into a non-circular through hole (14) in a surface portion of said second detail (10), said surface portion (13) of the second detail (10) abutting the first detail (11) that comprises the non-circular hole (14),
inserting a portion of said collar part (17) which extends out from said first detail (11) into said non-circular hole (14) of said surface portion of the second detail (10) which abuts and is parallel to the surface portion of the first detail (11), the height of the collar part (17) being larger than the material thickness at said surface portion of said second detail (10),
inserting a tool (18) through said aperture in the collar part (17), and
turning said tool (18) relative to the collar part (17) to deform a portion of said collar part (17) projecting out from said hole (14) in said second detail (10), thereby mutually interlocking said details (11, 10).

2. A system for joining two sheet metal details (11, 10), said system comprising said two sheet metal details (11, 10) wherein a surface portion of a first detail (11) has an outwardly extending collar part (17) which is integrated with the first detail (11) and has a hole (16), and further comprising a deformation tool (18) for mutually interlocking said details (11,10) upon turning of said tool (18), **characterized in**
that said hole of said collar part (17) is configured as a non-circular hole (16),
that a portion of said collar part (17) which extends out from said first detail (11) is insertable into a non-circular through hole (14) of a surface portion of the second detail (10) which is located in parallel abutment with the surface portion of the first detail (11),
that the height of the collar part (17) is larger than the material thickness at said surface portion of said second detail (10),
that a portion of said collar part (17) is so arranged as to project outwardly from said non-circular through hole (14) in said second detail (10), that the tool (18) is insertable with a first portion thereof into and through said non-circular hole (16) in the collar part (17), said first portion of said tool (18) shaped as a deformation head (19) the length (L) of which is smaller than the largest diameter of the non-circular hole (16) but larger than the smallest diameter of the non-circular hole (16).

3. A system according to claim 2, **characterized in** that at least one of said holes (14, 16) is oval.

4. A system according to claim 2, **characterized in** that the deformation head (19) of the tool continues into a second portion (20) which can be turned on said aperture of said collar part (17) without frictional resistance.

5. A system according to claim 4, **characterized in** that said second portion (20) has a longitudinal width which is substantially the sum of the material thickness of the two details (11, 10).

6. A system according to claim 4 or 5, **characterized in** that the second portion (20) continues into a third tool portion (21) which has an abutment surface (22) for limiting the insertion of the tool (18) into the collar part (17).

7. A system according to claim 6, **characterized in** that the third portion (21) is shaped as a handle.

8. A system according to anyone of the claims 2 - 7, for making a shelving arrangement, **characterized in** that the first detail (11) is a plate shaped bar, side panel or back panel for the arrangement, and that the second detail (10) is a post of the arrangement.

9. A system according to claim 8, **characterized in** that said first and second details (11, 10) with the extension of said non-circular holes (14, 16) are provided with further holes (23, 24) by means of which the details are interconnectable by conventional screw joints or the like.

10. A system according to anyone of claims 2 - 9, **characterized in** that the tool (18) is formed as a plate member.

## Patentansprüche

1. Verfahren zur Verbindung zweier Einzelteile aus Blech (11, 10), die aneinanderstoßende Oberflächen haben, wobei ein Oberflächenteil des ersten Einzelteils (11) ein sich nach außen erstreckendes Einfassungsteil (17) aufweist, das in das erste Einzelteil (11) integriert ist und ein Loch (16) aufweist, **gekennzeichnet durch**
Bilden des Einfassungsteils (17) als die Stoßfläche des ersten Einzelteils mit dem Loch (16), das nicht kreisförmig ist, wobei der Einfassungsteil (17) so gestaltet wird, daß er in ein nicht kreisförmiges Durchgangsloch (14) in einem Oberflächenteil des zweiten Einzelteils (10) paßt, wobei der Oberflächenteil (13) des zweiten Einzelteils (10) gegen das erste Einzelteil (11) stößt, das das nicht kreisförmige Loch (14) aufweist,
Einführen eines Teils des Einfassungsteils (17), der sich von dem ersten Einzelteil (11) ausstreckt, in das nicht kreisförmige Loch (14) des Oberflächenteils des zweiten Einzelteils (10), der an den Oberflächenteil des ersten Einzelteils (11) anstößt und parallel dazu ist, wobei die Höhe des Einfassungsteils (17) größer als die Materialdicke an dem Oberflächenteil des zweiten Einzelteils (10) ist,
Einführen eines Werkzeuges (18) durch die Öffnung in den Einfassungsteil (17) und
Drehen des Werkzeuges (18) relativ zum Einfassungsteil (17), um einen Teil des Einfassungsteils (17), der aus dem Loch (14) im zweiten Einzelteil (10) vorsteht, zu verformen, wodurch die Einzelteile (11, 10) gegenseitig verblockt werden.

2. System zur Verbindung zweier Einzelteile aus Blech (11, 10), die von dem System umfaßt sind, wobei ein Oberflächenteil eines ersten Einzelteils (11) ein sich nach außen erstreckendes Einfassungsteil (17) aufweist, das in das erste Einzelteil (11) integriert ist und ein Loch (16) aufweist, und wobei das System weiterhin ein Verformungswerkzeug (18) zum gegenseitigen Verblocken der Einzelteile (11, 10) beim Drehen des Werkzeuges (18) umfaßt, **dadurch gekennzeichnet,**
daß das Loch des Einfassungsteils (17) als ein nicht kreisförmiges Loch (16) gestaltet ist,
daß ein Teil des Einfassungsteils (17), der sich von dem ersten Einzelteil (11) ausstreckt, in ein nicht kreisförmiges Durchgangsloch (14) eines Oberflächenteils des zweiten Einzelteils (10) einführbar ist, der so liegt, daß er parallel an den Oberflächenteil des ersten Einzelteils (11) anstößt,
daß die Höhe des Einfassungsteils (17) größer als die Materialdicke an dem Oberflächenteil des zweiten Einzelteils (10) ist,
daß ein Teil des Einfassungsteils (17) so angeordnet ist, daß er von dem nicht kreisförmigen Durchgangsloch (14) im zweiten Einzelteil (10) nach außen vorsteht,
daß das Werkzeug (18) einen ersten Teil aufweist, mit dem es in und durch das nicht kreisförmige Loch (16) im Einfassungsteil (17) einführbar ist, wobei der erste Teil des Werkzeuges (18) als ein Verformungskopf (19) geformt ist, dessen Länge (L) kleiner als der größte Durchmesser des nicht kreisförmigen Lochs (16), aber größer als der kleinste Durchmesser des nicht kreisförmigen Lochs (16) ist.

3. System nach Anspruch 2, **dadurch gekennzeichnet,** daß mindestens eines der Löcher (14, 16) oval ist.

4. System nach Anspruch 2, **dadurch gekennzeichnet,** daß sich der Verformungskopf (19) des Werkzeuges in einen zweiten Teil (20) fortsetzt, der ohne Reibungswiderstand in der Öffnung des Einfassungsteils (17) gedreht werden kann.

5. System nach Anspruch 4, **dadurch gekennzeichnet,** daR der zweite Teil (20) eine longitudinale Breite hat, die im wesentlichen die Summe der Materialdicke der beiden Einzelteile (11, 10) ist.

6. System nach Anspruch 4 oder 5, **dadurch gekennzeichnet,** daß sich der zweite Teil (20) in einen dritten Werkzeugteil (21) fortsetzt, der eine Stoßfläche (22) zur Begrenzung des Einführens des Werkzeuges (18) in den Einfassungsteil (17) aufweist.

7. System nach Anspruch 6, **dadurch gekennzeichnet,** daß der dritte Teil (21) als ein Griff geformt ist.

8. System nach einem der Ansprüche 2 bis 7, zur Herstellung einer Regalanordnung, **dadurch gekennzeichnet,** daß das erste Einzelteil (11) eine plattenförmige Schiene, eine Seitenwand oder eine Rückwand für die Anordnung ist und daß das zweite Einzelteil (10) ein Ständer der Anordnung ist.

9. System nach Anspruch 8, **dadurch gekennzeichnet,** daß die ersten und zweiten Einzelteile (11, 10) mit der Erweiterung der nicht kreisförmigen Löcher (14, 16) mit weiteren Löchern (23, 24) versehen sind, mit deren Hilfe die Einzelteile durch konventionelle Schraubverbindungen oder dergleichen miteinander verbindbar sind.

10. System nach einem der Ansprüche 2 bis 9, **dadurch gekennzeichnet,** daß das Werkzeug (18) als ein Plattenglied geformt ist.

## Revendications

1. Procédé d'assemblage de deux pièces métalliques (11, 10) comportant des surfaces en butée, dans lequel une partie de surface de la première pièce (11) comporte une partie de collier s'étendant vers l'extérieur (17) qui est intégrée à la première pièce (11) et comporte un orifice (16),
caractérisé par :
la formation de ladite partie de collier (17) devant être la surface de butée de la première pièce, ledit orifice (16) étant non circulaire, ladite partie de collier (17) étant configurée pour s'ajuster à l'intérieur d'un orifice non circulaire (14) dans une partie de surface de ladite seconde pièce (10), ladite partie de surface (13) de la seconde pièce (10) étant en butée contre la première pièce (11) qui comprend l'orifice non circulaire (14),
l'introduction d'une partie de ladite partie de collier (17) qui s'étend à partir de ladite première pièce (11) à l'intérieur du dit orifice non circulaire (14) de ladite partie de surface de la seconde pièce (10) qui est en butée contre la partie de surface de la première pièce (11) et qui est parallèle à celle-ci, la hauteur de la partie de collier (17) étant supérieure à l'épaisseur du matériau sur ladite partie de surface de ladite seconde pièce (10),
l'introduction d'un outil (18) au travers de ladite ouverture aménagée dans la partie de collier (17), et
la rotation du dit outil (18) par rapport à la partie de collier (17) afin de déformer une partie de ladite partie de collier (17) pour la mettre en saillie à partir du dit orifice (14) dans ladite seconde pièce (10), emboîtant mutuellement lesdites pièces (11, 10).

2. Système d'assemblage de deux pièces métalliques en tôle (11, 10), ledit système comprenant lesdites deux pièces métalliques en tôle (11, 10), dans lequel une partie de surface d'une première pièce (11) comporte une partie de collier s'étendant vers l'extérieur (17) qui fait partie de la première pièce (11) et comporte un orifice (16), et comprenant en outre un outil de déformation (18) destiné à emboîter mutuellement lesdites pièces (11, 10) lors de la rotation du dit outil (18), caractérisé en ce que :
ledit orifice de ladite partie de collier (17) a une configuration d'orifice non circulaire,
une partie de ladite partie de collier (17) qui s'étend à partir de ladite première pièce (11) peut être introduite à l'intérieur d'un orifice non circulaire (14) d'une partie de surface de la seconde pièce (10) qui est positionnée en butée parallèle à la partie de surface de la première pièce (11),
la hauteur de la partie de collier (17) est supérieure à l'épaisseur du matériau sur ladite partie de surface de ladite seconde pièce (10),
une partie de ladite partie de collier (17) est aménagée de manière à saillir vers l'extérieur à partir du dit orifice non circulaire (14) dans ladite seconde pièce (10),
une première partie de l'outil (18) peut être introduite à l'intérieur et au travers du dit orifice non circulaire (16) de la partie de collier (17), ladite première partie du dit outil (18) étant formé en tête de déformation (19) dont la longueur (L) est inférieure au plus grand diamètre de l'orifice non circulaire (16), mais supérieure au plus petit diamètre de l'orifice non circulaire (16).

3. Système selon la revendication 2, caractérisé en ce qu'au moins l'un des dits orifices (14, 16) est ovale.

4. Système selon la revendication 2, caractérisé en ce que la tête de déformation (19) de l'outil peut se poursuivre en une seconde partie (20) qui peut être tournée sur ladite ouverture de ladite partie de collier (17) sans résistance de friction.

5. Système selon la revendication 4, caractérisé en ce que ladite seconde partie (20) a une largeur longitudinale qui est essentiellement la somme de l'épaisseur du matériau des deux pièces (11, 10)

6. Système selon les revendications 4 ou 5, caractérisé en ce que la seconde partie (20) se poursuit en une troisième partie d'outil (21) qui comporte une surface de butée (22) destinée à limiter l'introduction de l'outil (18) à l'intérieur de la partie de collier (17).

7. Système selon la revendication 6, caractérisé en ce que la troisième partie (21) est en forme de poignée.

8. Système selon l'une quelconque des revendications 2 à 7, destiné à réaliser un aménagement d'étagères, caractérisé en ce que la première pièce (11) est une barre en forme de plaque, un panneau latéral ou un panneau arrière de l'aménagement, et en ce que la seconde pièce (10) est un dormant de l'aménagement.

9. Système selon la revendication 8, caractérisé en ce que lesdites première et seconde pièces (11, 10) qui comportent l'extension des dits orifices non circulaires (14, 16) comportent d'autres orifices (23, 24) au moyen desquels les pièces peuvent être connectées entre elles à l'aide d'assemblages à vis ou similaire.

10. Système selon l'une quelconque des revendications 2 à 9, caractérisé en ce que l'outil (18) est un élément en forme de plaque.
